# EUROPÄISCHE PATENTSCHRIFT

(11) **EP 2 729 698 B1**
(45) Veröffentlichungstag und Bekanntmachung des Hinweises auf die Patenterteilung: **21.12.2016**
(21) Anmeldenummer: 12738029.3
(22) Anmeldetag: 05.07.2012
(51) Int. Cl.: F03D 1/06, B29C 47/02, B29D 99/00

(54) **ROTORFLÜGEL FÜR WINDKRAFTWERKE**
ROTOR VANE FOR WIND POWER PLANTS
PALE DE ROTOR POUR CENTRALES ÉOLIENNES

(30) Priorität: 08.07.2011 DE 202011103238 U
(43) Veröffentlichungstag der Anmeldung: 14.05.2014
(73) Patentinhaber: REHAU AG + Co, 95111 Rehau (DE)
(72) Erfinder: AL-SHEYYAB, Ahmad, 95111 Rehau (DE); MICHELS, Peter, 95028 Hof (DE)
(86) Internationale Anmeldenummer: PCT/EP2012/002817
(87) Internationale Veröffentlichungsnummer: WO 2013/007359

(56) Entgegenhaltungen:
- EP-A1- 1 522 724
- EP-A1- 2 253 834
- EP-A2- 2 363 599
- WO-A1-03/029647
- WO-A1-2009/003476
- WO-A1-2011/078327
- DE-A1-102007 036 917
- DE-A1-102008 023 082
- US-A- 4 976 587
- US-A1- 2009 068 017

## Beschreibung

Die vorliegende Erfindung betrifft Rotorflügel für Windkraftwerke, mit einem extrudierten, eine Kunststoff-Matrix aufweisenden, Basisprofil.

Ein derartiger Rotorflügel ist bereits aus der DE 31 43 686 bekannt. Der bekannte Rotorflügel weist ein extrudiertes Hohlprofil auf, welches einen Längsholm in Form eines Stahlrohres beinhaltet. Der, in das Hohlprofil eingesteckte, Längsholm soll zum einen eine Verbindung zwischen Rotorflügel und Windkraftrotor herstellen und zum anderen wesentliche Teile der auftretenden Wechselbiegelasten, bedingt durch den Betrieb des Flügels, aufnehmen. Hierdurch weist das Rotorprofil zwar eine hohe Stabilität auf, nachteilig ist, dass das Gewicht des Rotorflügels durch den Längsholm signifikant erhöht wird.

Ein Rotorflügel für Windkraftanlagen ist auch aus der DE 42 25 599 bekannt. Der Flügel weist ein Kunststoffprofil auf, welches mit GFK-Platten oder Metallplatten derart verbunden werden kann, dass ein Auftrieb erzeugender Rotorflügel entsteht. Ein gravierender Nachteil dieses Rotorflügels besteht darin, dass ein erheblicher Fertigungsaufwand dadurch entsteht, dass das Kunststoffprofil mit den GFK- oder Metallplatten verbunden werden muss.

Bekannt sind insbesodere auch duroplastische Rotorflügel. Diese weisen zwar eine sehr hohe Steifigkeit auf, jedoch stellt deren Entsorgung ein großes Problem dar.

Rotorflügel für Windkraftwerke mit bandförmigen Armierungselementen sind aus der WO 2009/003476 A1, EP 1 522 724 A1, WO 2011/078327 A1, US 4 976 587 A sowie der nachveröffentlichten EP 2 363 599 A2 bekannt. Die DE 10 2007 036 917 A1 offenbart ebenfalls einen armierten Rotorflügel für Windkraftanlagen. Ferner zeigen die EP 2 253 834 A1, DE 10 2008 023 082 A1 und WO 03/029647 A1 verschiedene Ausführungsformen von Wind-rad-Rotorblättern.

Der vorliegenden Erfindung liegt die Aufgabe zugrunde, einen Rotorflügel bereit zu stellen, welcher trotz niedrigem Gewicht eine ausreichende Stabilität aufweist, einfach und kostengünstig zu fertigen und darüber hinaus leicht recyclierbar ist.

Die Aufgabe wird erfindungsgemäß durch die Merkmale des Patentanspruchs 1 gelöst. Das Basisprofil gibt im Wesentlichen die Form des Flügels vor, wobei die bandförmige Armierung in die Kunststoff-Matrix des Basisprofils eingebettet ist und für ausreichende Stabilität des Rotorflügels sorgt. Diese Anordnung hat den Vorteil, dass im Zuge des Extrusionsverfahrens bereits die Armierung in die Kunststoff-Matrix integriert wird und kein weiterer Fertigungsschritt notwendig ist. Des Weiteren sind durch die gezielte lokale Armierung des Basisprofils keine weiteren Armierungen oder Versteifungen des Rotorflügels notwendig. Hierdurch kann das Gewicht des Rotorflügels deutlich reduziert werden. Das Basisprofil kann hierbei eine gewölbte oder symmetrische Flügelform aufweisen. Die extrudierbare, in der Regel thermoplastische Kunststoff-Matrix erlaubt ein einfaches Recycling des erfindungsgemäßen Rotorflügels, welches bei duroplastischen Rotorflügeln nicht möglich ist.

In einer bevorzugten Ausführungsform kann das Basisprofil mindestens eine geschlossene Hohlkammer aufweisen. Das Integrieren von Hohlkammern in das Basisprofil hat zum einen den Vorteil, dass zur Herstellung des Rotorflügels deutlich weniger Material verwendet wird und zum anderen kann das Gewicht des Rotorflügels zusätzlich reduziert werden.

In einer weiteren bevorzugten Ausführungsform weist das Basisprofil mehrere Hohlkammern auf. Zwischen den Hohlkammern können Trennstege angeordnet sein, welche die einzelnen Hohlkammern jeweils räumlich voneinander trennen.

Besonders bevorzugt sind die bandförmigen Armierungen im Bereich der Trennstege angeordnet, da an den Trennstegen in der Regel besonders hohe Belastungen auftreten. Des Weiteren ermöglicht eine Anordnung der bandförmigen Armierungen in den besagten Bereichen, trotz Integration von Hohlkammern. eine hohe Stabilität bei verhältnismäßig geringem Gewicht.

Die Trennstege sind vorzugsweise von einer umlaufenden Außenwandung umschlossen, wobei die bandförmigen Armierungen zweckmäßigerweise in einem an dem Trennsteg angrenzenden Bereich der Außenwandung angeordnet sind.

Um die Stabilität des Rotorprofils weiterhin zu erhöhen, können die Hohlkammern mit Schaumstoff ausgeschäumt sein. Als Schaummaterialen sind hierbei zum Beispiel Polyurethan, Polypropylen, Polyethylen, Polystyrol, Polyethylenterephthalat oder auch Mischungen bzw. Kombinationen der genannten Materialien, geeignet. Es ist zum einen möglich, dass alle Hohlräume mit dem Schaumstoff ausgeschäumt sind, es ist jedoch zum anderen auch möglich, dass nur einzelne Hohlräume des Basisprofils mit Schaumstoff gefüllt sind.

Die bandförmige Armierung besteht aus einem Faser-Matrix-Halbzeug in Form eines Organoblechs wobei unter dem Begriff Organoblech ein plattenförmiges thermoplastisches Prepreg zu verstehen ist. Das Faser-Matrix-Halbzeug kann auch Kunststofffasern kombiniert mit Hybridgarn enthalten.

Um eine möglichst effektive Luftanströmung des Rotorflügels über die gesamte Flügellänge zu erzielen, kann das Basisprofil in Längsrichtung eine Torsion, vorzugsweise von 3 bis 5 Grad je laufender Meter, aufweisen. Die Torsion kann hierbei beispielsweise während des Extrusionsvorgangs des Basisprofils mittels eines Extrusionsdrehkopfes erzeugt werden. Alternativ ist es ebenso möglich das Basisprofil im Anschluss an das Extrusionsverfahren mit Hilfe eines Richtapparates zu tordieren.

In einer weiteren bevorzugten Ausführungsform weist das Basisprofil an einem Endbereich eine Endkappe auf, welche Strömungsabrisse und Luftverwirbelungen minimiert. Dies hat den Vorteil, dass die sonst bei Windkraftanlagen auftretende Lärmbelästigung deutlich reduziert wird. Die Endkappe kann auf den Flügel geklebt, gesteckt oder geschweißt sein.

Die Kunststoff-Matrix des Basisprofils kann zur Erhöhung der Stabilität faserverstärkt sein. Die Faserverstärkung enthält zweckmäßigerweise Mineral-, insbesondere Glas- und/oder Kohlenstoff- und/oder Aramid- und/oder Basaltfasern und/oder Metallfasern. Vorzugsweise besteht die Faserverstärkung aus einem oder einer Mischung mehrerer der vorgenannten Materialien. Die Verstärkungsfasern der Faserverstärkung besitzen zweckmäßigerweise eine Dicke von 0,005 mm bis 0,02 mm. Die Kunststoff-Matrix des Basisprofils enthält z.B. Polypropylen und/oder PVC und/oder Polyethylen bzw. besteht aus einem oder einer Mischung mehrerer der vorgenannten Materialien. Um die Umweltverträglichkeit des erfindungsgemäßen Rotorflügels zu erhöhen, kann die Kunststoff-Matrix des Basisprofils zusätzlich zumindest teilweise aus recycliertem Kunststoff-Material bestehen, bzw. aus einer Mischung mehrerer recyclierter Kunststoff-Materialien.

Es kann sich als nützlich erweisen, wenn das Basisprofil des Rotorflügels an einem axialen Ende oder an beiden axialen Enden verjüngt ausgebildet ist. Dies führt zum einen zu weiteren Materialeinsparungen und einem geringeren Gesamtgewicht des Flügels und zum anderen können, durch gezielte Verjüngung des Basisprofils, die Strömungseigenschaften über die gesamte Länge des Flügels optimiert werden.

Der Rotorflügel kann bereichsweise verjüngt werden, indem an der Hinterkante des Flügels ein Pufferbereich angeordnet ist, welcher keine Hohlräume aufweist. Der Flügel kann durch teilweises Entfernen des Pufferbereichs, insbesondere durch Schneiden, in seiner Breite gekürzt werden.

Um eine möglichst effiziente Kraftübertragung des Rotorflügels auf einen Windkraftrotor zu gewährleisten und gleichzeitig eine ausreichend stabile Verbindung zwischen Rotorflügel und Windkraftrotor zu schaffen, ist mindestens ein zum Beispiel als Hohlprofil ausgebildeter Flügelholm zumindest teilweise im Basisprofil angeordnet. Um eine ausreichende Festigkeit und Witterungsbeständigkeit des Flügelholms zu erzielen, wird ein Flügelholm aus Edelstahl bevorzugt.

Der erfindungsgemäße Rotorflügel findet Anwendung bei Windkraftanlagen mit horizontaler Drehachse sowie bei Windkraftanlagen mit vertikaler Drehachse.

### Kurzbeschreibung der Zeichnungen

Nachfolgend werden Ausführungsbeispiele der Erfindung anhand der beigefügten Zeichnungen näher erläutert. Es zeigt:
- Fig. 1: eine Darstellung eines ersten Ausführungsbeispiels eines erfindungsgemäßen Rotorflügels im Querschnitt,
- Fig. 2a: eine Darstellung eines weiteren Ausführungsbeispiels in einer Längsansicht
- Fig. 2b: den Schnitt A-A in Fig. 2a
- Fig. 3a: eine Darstellung eines weiteren Ausführungsbeispiels in einer Längsansicht
- Fig. 3b: den Schnitt B-B in Fig. 3a
- Fig. 3c: den Schnitt C-C in Fig. 3b
- Fig. 4: eine Darstellung eines weiteren Ausführungsbeispiels
- Fig. 5: eine Darstellung eines weiteren Ausführungsbeispiels im Querschnitt
- Fig. 6: eine dreidimensionale Darstellung des Ausführungsbeispiels gemäß Fig.1
- Fig. 7: eine dreidimensionale Darstellung eines weiteren Ausführungsbeispiels mit Torsion um die Längsachse
- Fig. 8: ein Verfahren zur Herstellung eines erfindungsgemäßen Rotorflügels

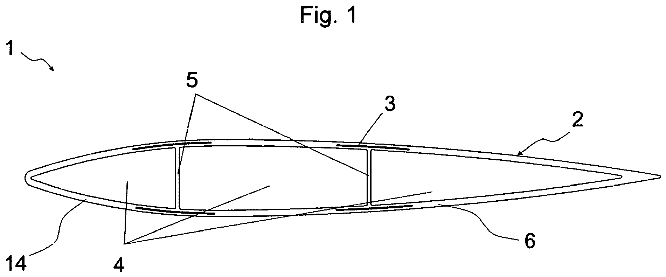

Die in Fig. 1 dargestellte Querschnittsdarstellung eines erfindungsgemäßen Rotorflügels 1 weist ein extrudiertes, eine Kunststoff-Matrix 14 enthaltendes, Basisprofil 2 auf, in welches mehrere bandförmige Armierungen 3 eingebettet sind. Im Basisprofil 2 sind Hohlkammern 4 angeordnet, welche vollständig vom Basisprofil 2 umschlossen werden. Des Weiteren sind zwischen den Hohlkammern 4 Trennstege 5 angeordnet, die die einzelnen Hohlkammern 4 räumlich voneinander trennen und dem Basisprofil 2 Stabilität verleihen. Die bandförmigen Armierungen 3 sind in den Bereichen der Trennstege 5 angeordnet. Das Basisprofil 2 weist weiterhin eine umlaufende Außenwandung 6 auf, welche die Trennstege 5 und die Hohlkammern 4 umschließt. Die bandförmigen Armierungen 3 sind hierbei in den den Trennstegen 5 angrenzenden Bereichen der Außenwandung 6 angeordnet.

Die bandförmigen Armierungen 3 sind als Organobleche ausgebildet. Alternativ können auch Metallbänder bzw. Kombinationen von Metallbändern und Organoblechen zum Einsatz kommen, zum Beispiel indem die beiden linken Armierungen 3 jeweils als Metallband und die beiden rechten Armierungen 3 jeweils als Organobleche ausgebildet sind.

Die Kunststoff-Matrix 14 des Basisprofils 2 weist eine Faserverstärkung auf welche vorzugsweise aus Mineral-, insbesondere Glas-, und/oder Kohlenstoff- und/oder Aramid- und/oder Basaltfasern und/oder Metallfasern besteht. Im Rahmen der Erfindung liegt auch eine Mischung der vorgenannten Materialien. Alternativ kann die Kunststoff-Matrix 14 jedoch auch keine Faserverstärkung enthalten.

Die Kunststoffmatrix 14 des Basisprofils 2 enthält optional zusätzlich ein recycliertes Kunststoff-Material, bzw. eine Mischung mehrerer recyclierter Kunststoff-Materialien.

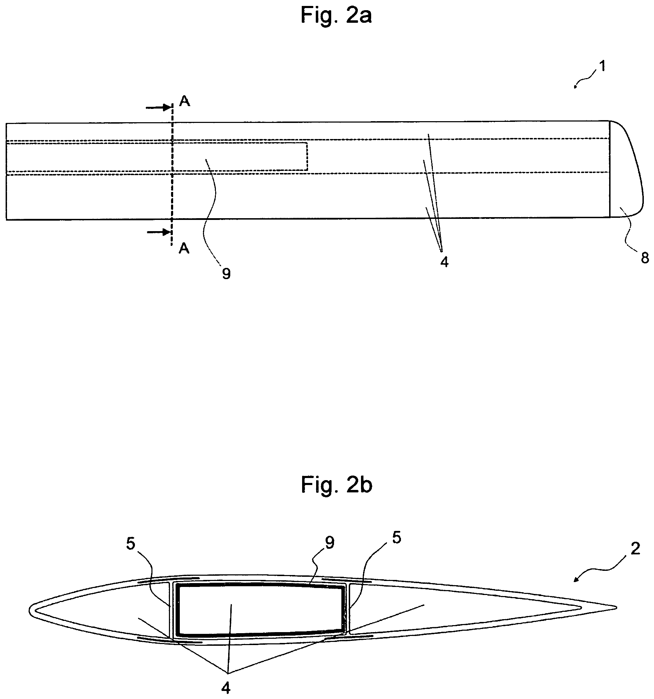

Fig. 2a zeigt eine Darstellung eines erfindungsgemäßen Rotorflügels 1 in der Längsansicht. Neben den in Fig. 1 genannten Merkmalen weist das Basisprofil 2 eine geräuschreduzierende Endkappe 8 auf, welche an einem Ende des Basisprofils 2 angeordnet ist. Des Weiteren ist in einer Hohlkammer 4 des Basisprofils 2 ein als Hohlprofil ausgebildeter Flügelholm 9 angeordnet, welcher zur Anbindung des Rotorflügels 1 an einen Windkraftrotor (in der Zeichnung nicht näher dargestellt) dient. Der Flügelholm 9 verläuft hierbei jedoch nicht über die gesamte Länge des Basisprofils 2.

Fig. 2b zeigt einen Schnitt durch die Ebene A-A, dargestellt in der Fig. 2. Der Flügelholm 9 ist innerhalb des Basisprofils 2 ist in einer zwischen den Trennstegen 5 liegenden Hohlkammer 4 angeordnet.

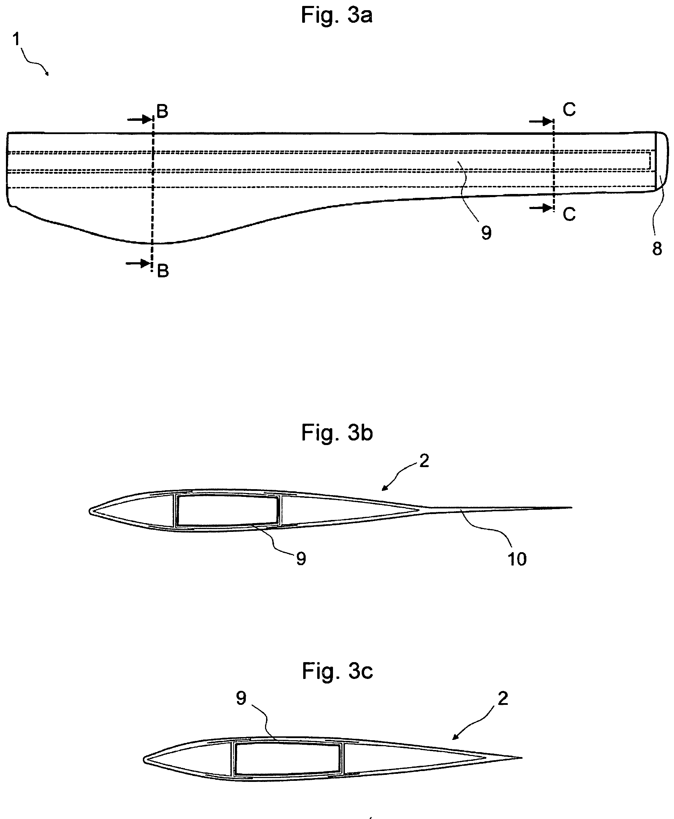

Fig. 3a zeigt eine Darstellung eines weiteren Ausführungsbeispiels eines erfindungsgemäßen Rotorflügels 1 in Längsansicht. Im Unterschied zu Fig.2 ist das Basisprofil 2 an beiden Enden verjüngt ausgebildet. Des Weiteren verläuft in diesem Ausführungsbeispiel der Flügelholm 9 über die gesamte Länge des Basisprofils 2.

Fig. 3b zeigt einen Schnitt durch die B-B Ebene, dargestellt in der Fig. 3. Neben den Merkmalen, welche bereits in den Fig. 1 und Fig. 2 beschrieben wurden, weist das Basisprofil an der Hinterkante des Flügels einen Pufferbereich 10 auf.

Fig. 3c zeigt einen Schnitt durch die Ebene C-C, welche sich in einen verjüngten Bereich des Basisprofils 2 befindet. Im Unterschied zu Fig. 3b wurde der Pufferbereich 10 an der Hinterkante des Basisprofils 2 im Zuge der Verjüngung des Rotorflügels 1, zum Beispiel Mittels eines Schneidvorgangs, entfernt.

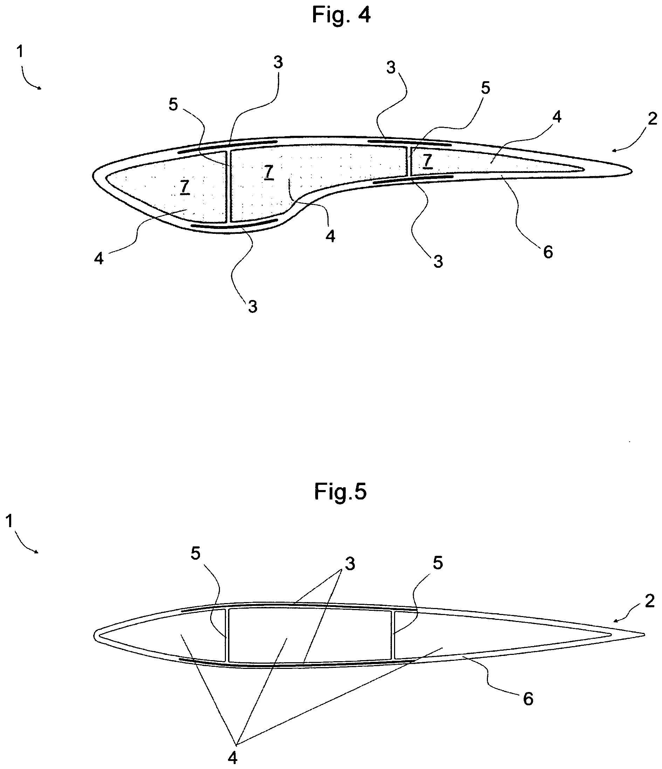

Fig. 4 zeigt eine Darstellung eines weiteren Ausführungsbeispiels eines erfindungsgemäßen Rotorflügels 1 im Querschnitt. Im Unterschied zu Fig. 1 weist das Basisprofil 2 hier eine alternative Flügelform auf, welche mehr Auftrieb produziert. Des Weiteren sind die Hohlkammern 4 mit Schaumstoff 7 gefüllt.

Fig. 5 zeigt eine Darstellung eines weiteren Ausführungsbeispiels eines erfindungsgemäßen Rotorflügels 1 im Querschnitt. Im Unterschied zu Fig. 1 und Fig. 2 verstärken die bandförmigen Armierungen 3 jeweils mehrere Trennstege 5 sowie zusätzlich die Bereiche zwischen den Trennstegen 5.

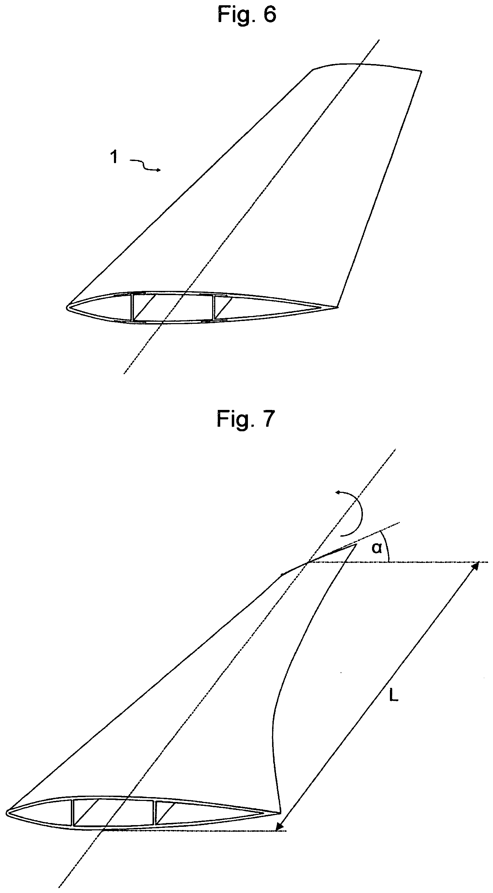

Die Fig. 6 zeigt eine dreidimensionale Darstellung des Rotorflügels 1 gemäß Fig. 1.

In Fig. 7 ist gegenüber Fig. 6 das Basisprofil 2 um seine Längsachse tordiert, wobei die Torsion α = 2 bis 8 Grad, insbesondere α = 3 bis 5 Grad, je laufender Meter L beträgt.

Der erfindungsgemäße Rotorflügel gemäß Fig. 1 bis Fig. 7 eignet sich für Windkraftanlagen mit horizontaler und vertikaler Drehachse.

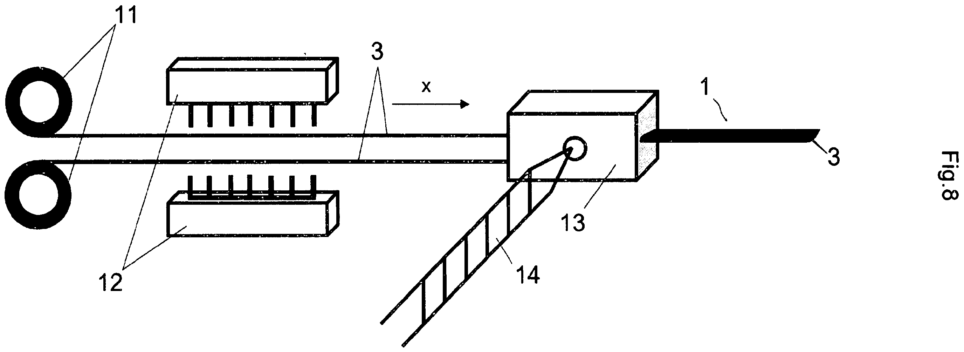

Fig. 8 zeigt ein Verfahren zur Herstellung eines erfindungsgemäßen Rotorflügels 1. Zunächst werden die bandförmigen Armierungen von Bandrollen 11 abgezogen und mittels Wärmestrahler 12 vorgewärmt. Nach der Vorwärmung werden die bandförmigen Armierungen in die Kunststoff-Matrix 14 einextrudiert. Das Material der Kunststoff-Matrix 14, z. B. PVC, PA, PP, PBT, PET, PPS oder Mischungen der genannten Materialien, wird einem Extruder 13 zugeführt, so dass am Austritt des Extruders 13 der gewünschte Rotorflügel vorliegt.

## Patentansprüche

1. Rotorflügel (1) für Windkraftwerke mit einem extrudierten, eine Kunststoff-Matrix (14) aufweisenden Basisprofil (2), wobei in die Kunststoffmatrix (14) mindestens eine bandförmige Armierung (3) einextrudiert ist und wobei die bandförmige Armierung (3) als Faser-Matrix-Halbzeug ausgebildet ist, **dadurch gekennzeichnet, dass** die bandförmige Armierung (3) in Form eines Organoblechs ausgebildet ist.

2. Rotorflügel (1) nach Anspruch 1, **dadurch gekennzeichnet, dass** das Basisprofil (2) mindestens eine geschlossene Hohlkammer (4) ausweist.

3. Rotorflügel (1) nach Anspruch 2, **dadurch gekennzeichnet, dass** das Basisprofil (2) mehrere Hohlkammern (4) und mindestens einen Trennsteg (5) aufweist, der zwischen zwei Hohlkammern (4) angeordnet ist.

4. Rotorflügel (1) nach Anspruch 3, **dadurch gekennzeichnet, dass** die bandförmige Armierung (3) im Bereich des Trennsteges (5) angeordnet ist.

5. Rotorflügel (1) nach Anspruch 4, **dadurch gekennzeichnet, dass** das Basisprofil (2) eine umlaufende Außenwandung (6) besitzt, die den Trennsteg (5) umschließt, wobei die bandförmige Armierung (3) in dem an den Trennsteg (5) angrenzenden Bereich der Außenwandung (6) angeordnet ist.

6. Rotorflügel (1) nach einem der Ansprüche 2 bis 5, **dadurch gekennzeichnet, dass** die Hohlkammer (4) mit Schaumstoff (7) ausgeschäumt ist.

7. Rotorflügel (1) nach einem der Ansprüche 1 bis 6, **dadurch gekennzeichnet, dass** die Kunststoff-Matrix (14) faserverstärkt ausgebildet ist.

8. Rotorflügel (1) nach einem der Ansprüche 1 bis 7, **dadurch gekennzeichnet, dass** die Kunststoff-Matrix (14) zumindest teilweise aus recycliertem Kunststoff besteht.

9. Rotorflügel (1) nach einem der vorhergehenden Ansprüche, **dadurch gekennzeichnet, dass** das Basisprofil (2) mindestens einen Flügelholm (9), vorzugsweise aus Edelstahl, aufweist, wobei der Flügelholm (9) zur Verbindung des Basisprofils mit einem Windkraftrotor dient.

10. Windkraftanlage mit mindestens einem Rotorflügel (1) nach einem der Ansprüche 1 bis 9.

## Claims

1. Rotor blade (1) for wind power plants comprising an extruded base profile (2) having a plastic matrix (14), wherein at least one strip-shaped reinforcement (3) is extruded into the plastic matrix (14) and wherein the strip-shaped reinforcement (3) is formed as a fibre-matrix semi-finished product, **characterized in that** the strip-shaped reinforcement (3) is designed in the form of an organosheet.

2. Rotor blade (1) according to Claim 1, **characterized in that** the base profile (2) has at least one closed hollow chamber (4).

3. Rotor blade (1) according to Claim 2, **characterized in that** the base profile (2) has a plurality of hollow chambers (4) and at least one separating web (5) which is arranged between two hollow chambers (4).

4. Rotor blade (1) according to Claim 3, **characterized in that** the strip-shaped reinforcement (3) is arranged in the region of the separating web (5).

5. Rotor blade (1) according to Claim 4, **characterized in that** the base profile (2) has a peripheral outer wall (6) which encloses the separating web (5), wherein the strip-shaped reinforcement (3) is arranged in the region of the outer wall (6) that adjoins the separating web (5).

6. Rotor blade (1) according to one of Claims 2 to 5, **characterized in that** the hollow chamber (4) is filled with foam (7).

7. Rotor blade (1) according to one of Claims 1 to 6, **characterized in that** the plastic matrix (14) is designed to be fibre-reinforced.

8. Rotor blade (1) according to one of Claims 1 to 7, **characterized in that** the plastic matrix (14) consists at least partially of recycled plastic.

9. Rotor blade (1) according to one of the preceding claims, **characterized in that** the base profile (2) has at least one blade spar (9) preferably of stainless steel, wherein the blade spar (9) serves to connect the base profile to a wind-powered rotor.

10. Wind power plant having at least one rotor blade (1) according to one of Claims 1 to 9.

## Revendications

1. Pale de rotor (1) pour éoliennes comprenant un profilé de base extrudé (2) présentant une matrice en plastique (14), au moins une armature (3) en forme de bande étant incorporée par extrusion dans la matrice en plastique (14) et l'armature en forme de bande (3) étant réalisée sous forme de produit semi-fini à matrice fibreuse, **caractérisée en ce que** l'armature en forme de bande (3) est réalisée sous la forme d'une tôle organique.

2. Pale de rotor (1) selon la revendication 1, **caractérisée en ce que** le profilé de base (2) présente au moins une chambre creuse fermée (4).

3. Pale de rotor (1) selon la revendication 2, **caractérisée en ce que** le profilé de base (2) présente plusieurs chambres creuses (4) et au moins une membrure de séparation (5) qui est disposée entre deux chambres creuses (4).

4. Pale de rotor (1) selon la revendication 3, **caractérisée en ce que** l'armature en forme de bande (3) est disposée dans la région de la membrure de séparation (5).

5. Pale de rotor (1) selon la revendication 4, **caractérisée en ce que** le profilé de base (2) possède une paroi extérieure périphérique (6) qui entoure la membrure de séparation (5), l'armature en forme de bande (3) étant disposée dans la région de la paroi extérieure (6) adjacente à la membrure de séparation (5).

6. Pale de rotor (1) selon l'une quelconque des revendications 2 à 5, **caractérisée en ce que** la chambre creuse (4) est remplie de mousse (7).

7. Pale de rotor (1) selon l'une quelconque des revendications 1 à 6, **caractérisée en ce que** la matrice en plastique (14) est réalisée de manière renforcée par des fibres.

8. Pale de rotor (1) selon l'une quelconque des revendications 1 à 7, **caractérisée en ce que** la matrice en plastique (14) se compose au moins en partie de plastique recyclé.

9. Pale de rotor (1) selon l'une quelconque des revendications précédentes, **caractérisée en ce que** le profilé de base (2) présente au moins un longeron de pale (9), de préférence en acier inoxydable, le longeron de pale (9) servant au raccordement du profilé de base à un rotor d'éolienne.

10. Éolienne comprenant au moins une pale de rotor (1) selon l'une quelconque des revendications 1 à 9.
